Europäisches Patentamt
European Patent Office
Office européen des brevets

(19)

(11) Publication number: **0 423 329 A1**

(12) **EUROPEAN PATENT APPLICATION published in accordance with Art. 158(3) EPC**

(21) Application number: 88909829.9

(51) Int. Cl.[5]: **C09K 3/16**

(22) Date of filing: **10.11.88**

(86) International application number: **PCT/JP88/01130**

(87) International publication number: **WO 90/05171 (17.05.90 90/11)**

(43) Date of publication of application: **24.04.91 Bulletin 91/17**

(84) Designated Contracting States: **DE FR GB IT**

(71) Applicant: **SEKISUI KAGAKU KOGYO KABUSHIKI KAISHA**
**4-4 Nishitemma 2-chome Kita-ku Osaka-shi Osaka 530(JP)**

(72) Inventor: **ANDO, Sumio**
**80-2, Aobadai Izumi-shi Osaka 590-02(JP)**
Inventor: **KAGOYAMA, Atsumu**
**5-9, Miyanokawara 4-chome Takatsuki-shi Osaka 569(JP)**
Inventor: **MIYAMOTO, Yasumitsu**
**90-20, Wake-cho Izumi-shi Osaka 594(JP)**

(74) Representative: **Silverman, Warren et al**
**HASELTINE LAKE & CO. Hazlitt House 28 Southampton Buildings Chancery Lane London WC2A 1AT(GB)**

## (54) ANTISTATIC COMPOSITION AND ANTISTATIC CHLORINATED RESIN COMPOSITION COMPRISING SAID ANTISTATIC COMPOSITION AND PROCESS FOR PREPARING THE SAME.

(57) This invention relates to an antistatic composition comprising an ammonium salt (a) represented by general formula (1), wherein one of $R_1$, $R_2$, and $R_3$ is an alkyl group having 5 to 24 carbon atoms and the remainders are each an alkyl group having 1 to 5 carbonatoms, $R_4$ is an alkylene group having 2 to 4 carbon atoms, n is an integer of 1 to 15, x is an anion of hydrochloric acid, chloric acid or perchloric acid, and a perchlorate (b) represented by the general formula $M(ClO_4)_m$, wherein M is an ion of a metal belonging to the groups 1A and 2A of the periodic table or an ammonium ion and m is 1 or 2; an antistatic composition comprising said ammonium salt (a), said perchlorate (b), and tri-2-ethylhexyl trimellitate (c); an antistatic chlorinated resin composition comprising said antistatic composition and a chlorinated containing resin; and a process for preparing the same.

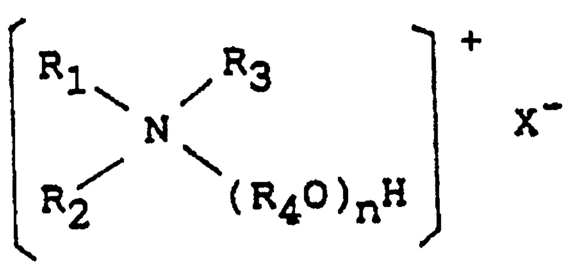

...(1)

EP 0 423 329 A1

An antistatic composition, and an antistatic chlorine-containing resin composition including the antistatic composition and a method for producing the same

## Technical Field of the Invention

The present invention relates to an antistatic composition kneaded into a resin composition, and to an antistatic chlorine-containing resin composition comprising the antistatic composition and a method for producing the same.

## Background Art

In general, a synthetic resin is easily electrified by static electricity due to its high electrical insulating property. When being electrified, the synthetic resin becomes ready to adsorb dust, which causes a lot of disadvantages. In processing a resin composition, for example, the quality of the finished product deteriorates because of dust adsorbed. The value of the finished product is also depreciated because the adsorbed dust makes the surface of the product dirty. Therefore, in order to enhance the value of the product, it is important to prevent the resin composition from being electrified.

An antistatic agent is generally added to the resin composition in order to prevent the product from being electrified. A chlorine-containing resin, and especially a vinyl chloride resin is widely used because it has excellent weather resistance and dimensional stability, it can be used for the formation of both rigid and non-rigid products, and it is a flame retardant resin. However, such a chlorine-containing resin, similarly to other synthetic resins, is easily electrified. Moreover, this chlorine-containing resin is easily decomposed when it is heated for the formation. Since such a decomposition causes the products to be colored, it is impossible to produce colorless and transparent products. Furthermore, the decomposition of chlorine-containing resin is often accelerated by mixing various kinds of ingredients such as the antistatic agent. Therefore, it is especially difficult to prevent the chlorine-containing resin composition from being electrified.

In the prior art, carbon black or metal powder is added to the resin composition in order to prevent the resin composition from being readily electrified. However, since the resin composition in which carbon black or metal powder is mixed makes the products opaque, it is impossible to obtain desired, clean colored products. For this reason, a vinyl chloride resin composition which is not easily electrified and can produce a colorless and transparent product is desired.

Antistatic agents made from organic compounds were employed in compliance with such a demand. Various kinds of compounds have already been proposed as the antistatic agents. For example, a quaternary ammonium salt represented by the following general formula 3 is proposed as the antistatic agent in Japanese Patent Publication No. 40-7366.

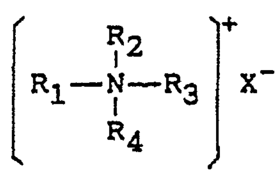

... (3)

wherein $R_1$ is an alkyl, alkenyl, alkylamidoethyl, or alkylamidopropyl group with 8 to 22 carbon atoms; $R_2$, $R_3$ and $R_4$ represent alkyl or hydroxyalkyl groups with 1 to 4 carbon atoms; and X represents an anion of perhalogenic acid, benzenesulfonic acid, or alkylbenzenesulfonic acid or an analog thereof.

According to the proposition of the above-mentioned official publication, a product which is not easily electrified and less colored as compared with that of the prior art can be obtained. However, after intense research, the present inventors were not satisfied with the antistatic property and the colorlessness and transparency of the product obtained according to the above-mentioned official publication. This is partly because such a value of electrical resistance of the product as shown in the above-mentioned official publication cannot be obtained, and partly because the resin is considered to be decomposed since the product, when the coloring degree thereof is measured, is not completely colorless and transparent but is slightly colored. Thus, it has been desired to develop an antistatic composition in which both the antistatic property and the colorlessness and transparency are more excellent, and an antistatic chlorine-containing resin composition including the antistatic composition.

An objective of the present invention which is accomplished in view of the above-mentioned problems is providing an antistatic composition from which a product with more improved colorlessness and transparency and a more excellent antistatic property can be obtained by avoiding the thermal decomposition of the resin and by reducing the electrical resistance of the resin. Another objective of the present invention is providing an antistatic chlorine-containing resin composition including the above-mentioned antistatic composition. Still another objective of the present invention is providing a method for producing the above-mentioned antistatic chlorine-containing resin composition.

## Disclosure of the Invention

The present inventors widely examined various characteristics of the antistatic agents disclosed in Japanese Patent Publication No. 40-7366 and compounds similar thereto, and especially the properties which are shown when being added to a vinyl chloride resin. As a result, the present inventors have found that when a specified quaternary ammonium compound selected from the antistatic agents disclosed in the above official publication was added to the vinyl chloride resin together with a specified perchlorate, it was possible to obtain a product with excellent heat stability which was less colored and was not easily electrified. The present inventors have also found that when the antistatic property and heat resistance were given to the vinyl chloride resin, the antistatic property could be retained for a long period of time by coexisting a tri-2-ethylhexyltrimellitate as a plasticizer. Moreover, the present inventors have found that when a specified ammonium salt which was not disclosed in the above-mentioned official publication was prepared and added to the vinyl chloride resin together with a specified perchlorate and the above-mentioned plasticizer, it was possible to obtain a resin composition in which the loss in weight on heating was small and the colorlessness and transparency and the antistatic property were excellent. The present invention has been accomplished on the basis of the above-mentioned views.

An antistatic composition of the first invention contains two kinds of compounds represented by the following formulae 1 and 2. The first of them is an N-(poly)oxyalkylene-N,N,N-trialkyl ammonium salt whose general formula is represented by the following formula 1:

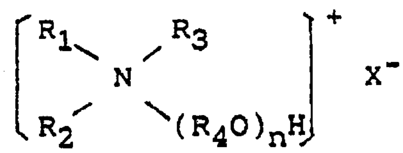 ... (1)

wherein one of $R_1$, $R_2$ and $R_3$ is an alkyl group with 5 to 24 carbon atoms while the others are alkyl groups with 1 to 5 carbon atoms; $R_4$ is an alkylene group with 2 to 4 carbon atoms; n represents an integer of 1 to 15; and X represents an anion of hydrochloric acid, chloric acid or perchloric acid.

The second compound is a perchlorate represented by the general formula $M(ClO_4)m$, wherein M is a metallic ion belonging to 1A or 2A in the periodic table or an ammonium ion $NH_4^+$, and m is an integer of 1 or 2.

In an antistatic composition of the second invention, the antistatic composition of the first invention mentioned above further contains a tri-2-ethylhexyltrimellitate. This tri-2-ethylhexyltrimellitate is a compound represented by the following formula 4:

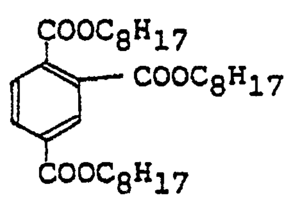 ... (4)

The antistatic chlorine-containing resin composition of the present invention contains the antistatic composition of the above-mentioned first or second invention and (d) a chlorine-containing resin.

In the present invention, it is preferable that 0.5 to 5 parts by weight of (a) ammonium salt and 0.01 to 2.5 parts by weight of (b) perchlorate are mixed with respect to 100 parts by weight of the above-mentioned

chlorine-containing resin. Also, it is preferable that 0.5 to 5 parts by weight of (a) ammonium salt, 0.01 to 2.5 parts by weight of (b) perchlorate and 30 to 100 parts by weight of (c) tri-2-ethylhexyltrimellitate are mixed with respect to 100 parts by weight of the above-mentioned chlorine-containing resin.

In addition, a method for producing the antistatic chlorine-containing resin composition of the present invention includes a step of mixing the above-mentioned (a) ammonium salt and (b) perchlorate and a step of adding the mixture to the chlorine-containing resin. Also, a method for producing another antistatic chlorine-containing resin composition includes a step of mixing the above (a) ammonium salt and the above (b) perchlorate and a step of adding the mixture and (c) tri-2-ethylhexyltrimellitate to the chlorine-containing resin.

(Relation to the Prior Art)

Since the antistatic compositions of the first and second inventions contain the ammonium salt represented by formula 1 and the perchlorate represented by formula 2, they are different from the antistatic agents disclosed in Japanese Patent Publication No. 40-7366. In this official publication, the ammonium salt represented by formula 3 is singly used as the antistatic agent without using other compounds. According to the present invention, by using the ammonium salt of formula 1 together with the perchlorate of formula 2, the antistatic effect of the antistatic composition can be improved and a product which is almost colorless and transparent can be obtained.

The antistatic composition of the second invention contains tri-2-ethylhexyltrimellitate as the plasticizer. Although such a plasticizer is known as one used for the vinyl chloride resin, an idea in which this plasticizer is employed together with the ammonium salt and perchlorate functioning as the antistatic agent is not known.

(Description of the Ammonium Salt)

In the ammonium salt of the present invention represented by formula 1, as mentioned above, one of $R_1$, $R_2$ and $R_3$ is an alkyl group with 5 to 24 carbon atoms, and preferably an alkyl group with 8 to 18 carbon atoms, while the others are alkyl groups with 1 to 5 carbon atoms, and preferably alkyl groups with 1 to 2 carbon atoms. $R_4$ is an alkylene group with 2 to 4 carbon atoms, and preferably an alkylene group with 2 to 3 carbon atoms. Also, n is an integer of 1 to 15, and preferably 1 to 5. X is usually an anion of hydrochloric acid or perchlorate.

The proportion of the ammonium salt represented by formula 1 is preferably 0.5 to 5 parts by weight, and more preferably 0.5 to 3 parts by weight with respect to 100 parts by weight of the resin. When the proportion of ammonium salt added is less than 0.5 parts by weight, the ammonium salt cannot exhibit its effects sufficiently. On the contrary, when the proportion of ammonium salt added exceeds 5 parts by weight, the ammonium salt bleeds out on the surface of the product without being miscible with the resin, resulting in a product in which the appearance is disfigured and the heat resistance and water resistance are reduced.

(Description of the Perchlorate)

In formula 2, M is a metallic ion belonging to 1A or 2A in the periodic table or an ammonium group, i.e., M is selected from a group including, for example, lithium, sodium, potassium, rubidium, beryllium, magnesium, calcium, strontium, barium and ammonium. Among them, lithium, barium, magnesium and ammonium are preferable.

The amount of the added perchlorate of formula 2 can be determined on the basis of the amount of the ammonium salt of formula 1. Specifically, the proportion of the compound of formula 2 is preferably 0.02 to 0.5 parts by weight, and more preferably 0.05 to 0.3 parts by weight with respect to 1 part by weight of the compound of formula 1. When the proportion of the added perchlorate of formula 2 is less than 0.02 parts by weight, the perchlorate cannot exhibit a sufficient antistatic effect. When the proportion of the added perchlorate exceeds 0.5 parts by weight, the antistatic effect which is exhibited by the perchlorate together with the ammonium salt of formula 1 is not improved in proportion to the increase of the perchlorate. On the contrary, the heat stability and water resistance of the resin deteriorate.

The amount of the perchlorate added is preferably 0.01 to 2.5 parts by weight, more preferably 0.01 to

1.5 parts by weight, and most preferably 0.01 to 0.9 parts by weight with respect to 100 parts by weight of the resin.

(Description of the Tri-2-ethylhexyltrimellitate)

As mentioned above, the tri-2-ethylhexyltrimellitate (hereinafter abbreviated as TM) is known as a plasticizer used for vinyl chloride resin.

When a small amount of TM is added to the vinyl chloride resin, it is only a rigid product that can be obtained. On the contrary, when a large amount of TM is added, a non-rigid product can be obtained. When TM is added to the resin together with the ammonium salt of formula 1 and the perchlorate of formula 2, the loss in weight on heating of the obtained resin composition is reduced and the solubility of TM with respect to the resin is excellent, whereby the antistatic property can be retained for a long period of time and a product which is colorless and transparent, or less colored can be obtained. The amount of TM added to the resin is preferably 30 to 100 parts by weight with respect to 100 parts by weight of the resin.

(Other Additives)

Known ingredients such as stabilizers, fillers, dyes, pigments, or the like contained in the resin composition are added to the chlorine-containing resin, especially to the vinyl chloride resin composition. Various additives which are added generally in the process for processing the resin may be added to the antistatic chlorine-containing resin composition of the present invention. Also, the antistatic chlorine-containing resin composition of the present invention may contain other plasticizers, such as fatty esters, esters of phthalic acid, esters of adipic acid, esters of trimellitic acid except for TM, or the like. It is preferable to use 30 to 100 parts by weight, and more preferably 40 to 70 parts by weight of such a plasticizer for every 100 parts by weight of the resin.

(Influence of the Order of Addition)

In the antistatic chlorine-containing resin composition of the present invention, by changing the order in which the ingredients to be mixed are added, the electrical resistance or the antistatic property of the obtained resin composition changes slightly.

For example, a product having a more excellent antistatic property can be produced from the resin composition obtained in such a way that the ammonium salt of formula 1 and the perchlorate of formula 2 are sufficiently mixed and then the mixture is added to the plasticizer (especially to TM) and/or the vinyl chloride resin, rather than from the resin composition obtained in such a way that the ammonium salt of formula and the perchlorate of formula 2 are separately added to the vinyl chloride resin. The resin composition may be obtained in such a way that, after the ammonium and perchlorate are separately added to and mixed with the plasticizer (especially TM), these mixtures are mixed with each other and then mixed with the resin. In particular, an antistatic chlorine-containing resin composition having a more improved antistatic property can be obtained in such a way that the ammonium salt and the perchlorate are sufficiently mixed with each other, especially under heat (for example at the temperature of 40 to 100 °C), for 1 to 2 hours, which is then cooled and added to the plasticizer (especially TM) for mixture, and thereafter the mixture is added to the resin. In the obtained resin composition, not only the antistatic property but also the heat stability and water resistance are improved.

(Effect of the Invention)

The antistatic composition of the present invention, which contains the ammonium salt of formula 1 and the perchlorate of formula 2, has the following effects:

① When this antistatic composition is mixed with the chlorine-containing resin, an antistatic chlorine-containing resin composition which is not easily electrified can be obtained. Therefore, since the resin composition adsorbs no dust during its processing, the quality of the product obtained by processing the resin composition may not be deteriorated.

② Since the obtained product is not easily electrified, it adsorbs no dust. Therefore, the surface of the

product can be kept clean. This is clarified by measuring the electrical resistance of the product. Specifically, the electrical resistance of the product obtained by the present invention is smaller than that of the product obtained by the prior art by more than one order of magnitude, usually by two to four orders of magnitude in ohms.

③ A product of less colored or of colorless and transparent can be obtained from the antistatic chlorine-containing resin composition.

④ Since the antistatic composition of the second invention contains the tri-2-ethylhexyltrimellitate, by preparing the content thereof, characteristics of the product can be arbitrarily changed, i.e., it becomes possible to produce either a rigid or non-rigid product, and a colorless and transparent product can be obtained.

⑤ Since the resin composition contains tri-2-ethylhexyltrimellitate, volatiles of the resin composition are reduced, whereby a product which is not easily electrified for a long period of time can be obtained.

As mentioned above, since the resin composition of the present invention can retain its heat resistance and antistatic property for a long period of time, it has a large effect in the practical use. The antistatic chlorine-containing resin composition of the present invention can preferably be used for, for example, interior materials of automobiles. Since volatiles of the plasticizer or the like in the interior materials are small, the transmissivity of the front glass may not lessened due to the volatiles, so that the safety of the automobiles is not reduced.

(Examples)

The present invention will be specifically described below with reference to Examples and Comparative Examples.

In the following examples, parts are based on weight. The properties of the products obtained in Examples and Comparative Examples below are measured as follows:

Tensile test: 20 °C, dumbbell No. 3, tensile speed of 200 mm/min.

Solubility: 50 °C, examination for the presence of a bleed after leaving the product for 120 hours under a relative humidity of 95%

Electrical resistance:

(1)

Surface resistance: measured in ohms at 30 °C, under a relative humidity of 50%

(2)

Volume resistivity: calculated in ohm-cm at 30 °C, under a relative humidity of 50%

Volatile loss: the proportion of loss in weight (weight %) after being heated ate 100 °C for 6 hours, i.e., loss in weight on heating.

Coloring property: The color of the product was estimated visually and graded into six coloring degrees, and the evaluation was made as follows: 1: colorless, 6: yellow.

Example 1

In this example, an N-polyoxyethylene-N,N,N-decyldimethyl ammonium perchlorate was used as the ammonium salt of formula 1, wherein $R_1$ was a decyl group, $R_2$ and $R_3$ were methyl groups, $R_4$ was an ethylene group, and n was 3. Also, a magnesium perchlorate $Mg(ClO_4)_2$ was used as the perchlorate of formula 2 in which M represents magnesium.

First, 3 parts of the ammonium perchlorate, 0.7 parts of the magnesium perchlorate, 50 parts of dioctyl phthalate, 2.5 parts of barium-zinc stabilizer (produced by Nissan Pherro Co., Ltd., LTL-272) and 2 parts of epoxy stabilizer ( produced by Adeca Agasu Co., Ltd., D-178) were mixed with 100 parts of vinyl chloride resin. This mixture was then kneaded by a roller at 160 °C for 6 minutes to obtain an antistatic chlorine-containing resin composition. This resin composition was then pressed at 170 °C for 7 minutes to obtain a resin sheet.

The properties, i.e., the tensile strength, solubility, electrical resistance, coloring degree, and volatile loss of the obtained resin sheet were measured. As a result, in the tensile test, the elongation percentage was 345% and the tensile strength was 2.55 kg/mm$^2$. In the solubility test, no bleed was observed. The surface resistance was 8.0 x $10^8$ ohm and the volume resistivity was 4.3 x $10^9$ ohm-cm. The estimated coloring degree was 1, i.e., the resin sheet was colorless and transparent. The volatile loss was 0.45%.

Therefore, it was accepted that the resin sheet of this example was not easily electrified, and colorless and transparent.

Example 2

This example shows an antistatic chlorine-containing resin composition containing no plasticizer.

An N-polyoxyethylene-N,N,N-decyldimethyl ammonium perchlorate was used as the ammonium salt of formula 1, wherein $R_1$ was a decyl group, $R_2$ and $R_3$ were methyl groups, $R_4$ was an ethylene group, and n was 2. The ammonium salt of this example is different from that of Example 1 in the value of n.

Also, a lithium perchlorate was used as the perchlorate of formula 2, wherein M was lithium.

First, 4.8 parts of the ammonium perchlorate, 0.8 parts of the lithium perchlorate, 3 parts of epoxidized soybean oil as a stabilizer, 1 part of octyl-stannous mercaptide, and 1 part of barium-zinc stabilizer (produced by Nissan Pherro Co., Ltd,, LTL-272) were added to 100 parts of vinyl chloride resin and sufficiently mixed at room temperature. The mixture was then kneaded with a roller at 175 to 185 °C for 6 minutes to obtain an antistatic chlorine-containing composition. Then, this resin composition was pressed at 180 °C for 7 minutes so as to obtain a resin sheet.

Next, the properties of this resin sheet were evaluated in the same manner as in Example 1. In the solubility test, no bleed was observed. The surface resistance was $4.0 \times 10^{10}$ ohm and the volume resistivity was $7.0 \times 10^{10}$ ohm-cm. The estimated coloring degree was 1, i.e., the resin sheet was colorless and transparent. The volatile loss was 0.05%. Therefore, it was accepted that the resin sheet of this example was not easily electrified, and was colorless and transparent.

Example 3

As the ammonium salt of formula 1, an ammonium salt represented by the following formula was used, wherein $R_1$ was a decyl group, $R_2$ and $R_3$ were ethyl groups, $R_4$ was a propylene group, and n was 2:

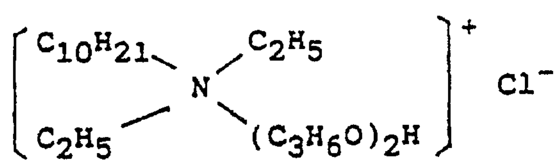

As the perchlorate of formula 2, a barium perchlorate was used, wherein M was barium.

First, 1 part of the ammonium chloride, 0.4 parts of the barium perchlorate and 40 parts of didecyladipate as a plasticizer were added to 100 parts of vinyl chloride resin, and the same amount of the same stabilizer as used in Example 1 was also added. Then, a resin sheet was obtained in the same manner as in Example 1.

Next, the properties of the resin sheet were evaluated in the same manner as in Example 1. In the tensile test, the elongation percentage was 300% and the tensile strength was 2.60 $kg/mm^2$. In the solubility test, no bleed was observed. The surface resistance was $4.5 \times 10^8$ ohm and the volume resistivity was $2.0 \times 10^9$ ohm-cm. The estimated coloring degree was 1, i.e., the resin sheet was colorless and transparent. The volatile loss was 0.15%.

Therefore, the resin sheet of this example was accepted as an excellent, colorless and transparent sheet which was not easily electrified.

Example 4

A compound represented by the following formula was used:

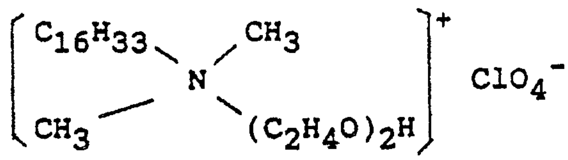

Also, a lithium perchlorate was employed as the perchlorate of formula 2.

First, 3 parts of the ammonium salt, 0.3 parts of the lithium perchlorate, 45 parts of dibutylphthalate as a plasticizer, and the same amount of the same stabilizer as used in Example 1 were added to 100 parts of vinyl chloride resin, and then a resin sheet was obtained in the same manner in Example 1.

Next, the properties of this resin sheet were measured. In the tensile test, the elongation percentage was 290% and the tensile strength was 2.30 kg/mm$^2$. In the solubility test, no bleed was observed. As for the electrical resistance, the surface resistance was 4.0 x $10^8$ ohm and the volume resistivity was 2.1 x $10^9$ ohm-cm. As for the coloring property, the resin sheet was colorless and transparent and the estimated coloring degree was 2. The volatile loss was 2.55%. Therefore, the resin sheet of this example was accepted as an excellent product which was not easily electrified and was colorless and transparent as a whole.

## Example 5

In this example, the order in which the ingredients are added was considered.

In this example, an ammonium salt represented by the following formula was employed as the ammonium salt of formula 1:

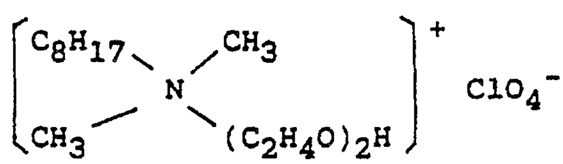

Also, a lithium perchlorate was used as the perchlorate of formula 2, and diisononyl phthalate was used as the plasticizer.

These ingredients were added in the following order. First, 5 g of the ammonium salt and 0.4 g of the lithium perchlorate were added to 100 g of the diisononyl phthalate. This mixture was sufficiently mixed at 60°C for 1 hour, and was then cooled so as to obtain a transparent solution. Next, 55 parts of this solution was added to 100 parts of vinyl chloride resin, and thereafter the same stabilizer as used in Example 1 was added in the same proportion as in Example 1.

Then, a sheet of 1 mm in thickness was obtained in the same manner as in Example 1 and the properties thereof were measured. As a result, in the tensile test, the elongation percentage was 310% and the tensile strength was 2.4 kg/mm$^2$. In the solubility test, no bleed was observed. As for the electrical resistance, the surface resistance was 4.8 x $10^8$ ohm and the volume resistivity was 9.5 x $10^8$ ohm-cm. As for the coloring property, the sheet was negligibly colored so that the estimated coloring degree was 2. The volatile loss was 0.35%. Therefore, the resin sheet as a whole was accepted as an excellent product which was not easily electrified, and colorless and transparent.

## Example 6

In this example, the same ingredients as in Example 5 were added simultaneously without considering the order of addition.

First, 52.5 parts of diisononyl phthalate, 2.5 parts of the ammonium salt and 0.2 parts of the lithium perchlorate used in Example 5 were added to 100 parts of the vinyl chloride resin simultaneously, and the same stabilizer was also added thereto in the same proportion.

Next, a sheet of 1 mm in thickness was obtained and the properties thereof were measured in the same manner as in Example 1. As a result, in the tensile test, the elongation percentage was 300% and the

tensile strength was 2.5 kg/mm$^2$. In the solubility test, no bleed was observed. As for the electrical resistance, the surface resistance was 7.5 x $10^8$ ohm-cm and the volume resistivity was 2.0 x $10^9$ ohm-cm. As for the coloring property, the sheet was negligibly colored so that the estimated coloring degree was 2. The volatile loss was 0.40%. Therefore, the resin sheet of this example was accepted as an excellent non-rigidvinyl chloride resin sheet which was not easily electrified and colorless and transparent as a whole.

When the resin sheet of Example 6 is compared with that of Example 5, the resin sheet of Example 5 is superior in antistatic property to that of Example 6, because the resin sheet of Example 5 has smaller electrical resistance. This may be subjected by the influence of addition.

Comparative Example 1

In this Comparative Example, only the ammonium salt was added as the antistatic agent without using the perchlorate. The ammonium salt represented by the following formula was employed as the antistatic agent:

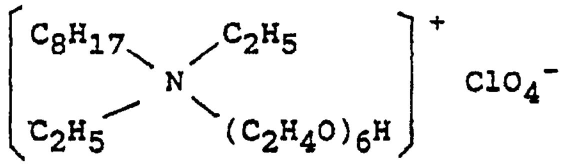

Also, a dioctyl phthalate was used as the plasticizer.

First, 5 parts of the antistatic agent and 50 parts of the plasticizer were added to 100 parts of vinyl chloride, and the same amount of the same stabilizer as used in Example 1 was added. A sheet was then obtained in the same manner as in Example 1.

Next, the properties of the sheet were measured. In the tensile test, the elongation percentage was 330% and the tensile strength was 2.50 kg/mm$^2$. In the solubility test, no bleed was observed. As for the electrical resistance, the surface resistance was 6.0 x $10^9$ ohm and the volume resistivity was 1.0 x $10^{11}$ ohm-cm. As for the coloring property, the sheet was considerably colored so that the estimated coloring degree was 4. The volatile loss was 0.46%. Therefore, the resin sheet of this example was regarded as an inferior sheet which was comparatively electrified with ease and considerably colored.

Comparative Example 2

In this Comparative Example, only the plasticizer was added to the vinyl chloride resin without using any antistatic agent.

First, 50 parts of dioctyl phthalate was added as the plasticizer to 100 parts of the vinyl chloride resin, and the same amount of the same stabilizer as used in Example 1 was then added thereto. Next, a resin sheet was obtained in the same manner as in Example 1.

The properties of the resin sheet were measured. In the tensile test, the elongation percentage was 310 and the tensile strength was 2.55 kg/mm$^2$. In the solubility test, no bleed was observed. As for the electrical resistance, the surface resistance was 1.0 x $10^{12}$ ohm and the volume resistivity was 9.0 x $10^{12}$ ohm-cm. As for the coloring property, the sheet was colorless and transparent so that the estimated coloring degree was 1. The volatile loss was 0.77%. Therefore, the resin sheet of this example as a whole was disadvantageous because it was easily electrified, but the colorlessness and transparency thereof was judged to be excellent.

Example 7

In this example, an ammonium perchlorate represented by the following formula was employed as the ammonium salt of formula 1 in which $R_1$ was an octyl group, $R_2$ and $R_3$ were methyl groups, $R_4$ was an ethylene group, and n was 2:

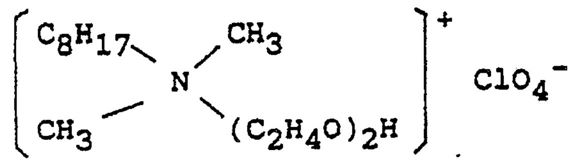

Also, a magnesium perchlorate $Mg(ClO_4)_2$ was used as the perchlorate of formula 2 in which M was magnesium.

First, 2 parts of the ammonium perchlorate, 0.5 parts of the magnesium perchlorate, and 70 parts of tri-2-ethylhexyltrimellitate (TM) were added to 100 parts of the vinyl chloride resin. Then, 2.5 parts of barium-zinc stabilizer (produced by Nissan Pherro Co., Ltd., LTL-272) and 2 parts of epoxy stabilizer (produced by Adeca Agasu Co., Ltd., D-178) were also mixed as the stabilizers. This mixture was kneaded at 160 °C for 6 minutes, and then pressed at 170 °C for 7 minutes so as to obtain a resin sheet.

Next, the properties of the resin sheet were measured in the same manner as in Example 1. As a result, in the tensile test, the elongation percentage was 370% and the tensile strength was 2.75 kg/mm$^2$. In the solubility test, no bleed was observed. The surface resistance was 3.1 x $10^9$ ohm and the volume resistivity was 1.8 x $10^{10}$ ohm-cm. The resin sheet was completely colorless and transparent so that the estimated coloring degree was 1, and the volatile loss was 0.03%. Therefore, the resin sheet of this example was accepted as an excellent sheet which was not easily electrified, was colorless and transparent, and could retain its properties for a long period of time.

## Example 8

In this example, an ammonium perchlorate was employed as the ammonium salt of formula 1 in which $R_1$ was an octyl group, $R_2$ and $R_3$ were ethyl groups, $R_4$ was an ethylene group, and n was 2, the ammonium perchlorate being a compound represented by formula:

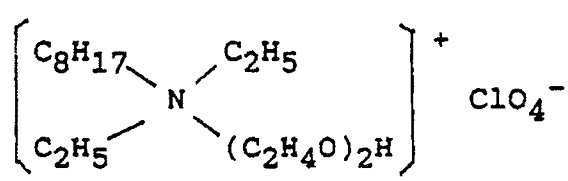

Also, a barium perchlorate $Ba(ClO_4)_2$ was used as the perchlorate of formula 2 in which M was barium.

First, 1 part of the ammonium perchlorate, 0.6 parts of the barium perchlorate, and 70 parts of TM were added to 100 parts of the vinyl chloride resin, and the same amount of the same stabilizer as used in Example 7 was also mixed. Then, this mixture was processed in the same manner as in Example 7 so as to obtain a sheet.

Next, the properties of this sheet were measured. In the tensile test, the elongation percentage was 340% and the tensile strength was 2.50 kg/mm$^2$. In the solubility test, no bleed was observed. As for the electrical resistance, the surface resistance was 3.0 x $10^9$ ohm and the volume resistivity was 9.5 x $10^9$ ohm-cm. The resin sheet was colorless and transparent and the estimated coloring degree was 1. The loss in weight on heating was 0.05%. Therefore, the sheet of this example was accepted as an excellent sheet which was not easily electrified, was colorless and transparent, and could retain its properties for a long period of time due to its small loss in weight on heating.

## Example 9

In this example, a compound represented by the following formula was employed as the ammonium salt of formula 1:

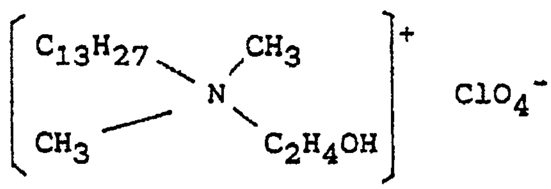

Also, similarly to Example 8, a barium perchlorate was used as the perchlorate of formula 2.

First, 3 parts of the ammonium salt, 0.3 parts of the barium perchlorate, and 60 parts of TM were added to 100 parts of the vinyl chloride resin, and the same amount of the same stabilizer as used in Example 7 was also mixed. Then, this mixture was processed in the same manner as in Example 7 so as to obtain a sheet.

Next, the properties of this sheet were measured. In the tensile test, the elongation percentage was 290% and the tensile strength was 2.65 kg/mm$^2$. In the solubility test, no bleed was observed. As for the electrical resistance, the surface resistance was 1.0 x $10^9$ ohm and the volume resistivity was 6.0 x $10^9$ ohm-cm. The sheet was colorless and transparent and the estimated coloring degree was 1. The loss in weight on heating was 0.055. Therefore, the sheet of this example was accepted as an excellent sheet which was not easily electrified, was colorless and transparent, and could retain its properties for a long period of time due to its small loss in weight on heating.

<u>Example 10</u>

In this example, the influence of the order in which the antistatic agents are added was examined.

In this example, a compound represented by the following formula was used as the ammonium salt of formula 1:

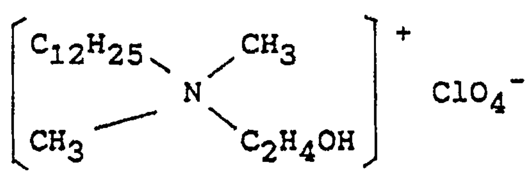

Also, a magnesium perchlorate $Mg(ClO_4)_2$ was used as the perchlorate of formula 2.

The ingredients were added in the following order. First, 3 g of the ammonium salt and 0.1 g of the magnesium perchlorate were added to 100 g of TM, and sufficiently mixed at 50°C for 2 hours. Then, 70 parts of this mixture was added to 100 parts of the vinyl chloride resin, and thereafter the same amount of the stabilizer as used in Example 7 was added and sufficiently mixed at room temperature. The mixture was then kneaded with a roller at 170°C for 6 minutes, and thereafter, it was pressed at 170°C for 7 minutes so as to obtain a resin sheet of 1 mm in thickness.

Next, the properties of this sheet were measured. In the tensile test, the elongation percentage was 360% and the tensile strength was 2.6 kg/mm$^2$. In the solubility test, no bleed was observed. As for the electrical resistance, the surface resistance was 2.0 x $10^9$ ohm and the volume resistivity was 4.9 x $10^9$ ohm-cm. The estimated coloring degree was 1 and the loss in weight on heating was 0.03%. Therefore, the resin sheet of this example was accepted as an excellent sheet which was not easily electrified, was colorless and transparent, and could retain its properties for a long period of time due to its small loss in weight on heating.

<u>Example 11</u>

In this example, the same ingredients as used in Example 10 were added at the same time.

First, 68 parts of TM as the plasticizer, 2.1 parts of the same ammonium salt as used in Example 10, and 0.07 parts of magnesium perchlorate were added to 100 parts of the vinyl chloride resin at the same time, and the same amount of the same stabilizer as used in Example 7 was also added. These were sufficiently mixed at room temperature. Then, a sheet was obtained in the same manner as in Example 10.

Next, the properties of the sheet were measured. In the tensile test, the elongation percentage was 355% and the tensile strength was 2.7 $kg/mm^2$. In the solubility test, no bleed was observed. The electrical resistance was 5.5 x $10^9$ ohm and the volume resistivity was 1.8 x $10^{10}$ ohm-cm. The estimated coloring degree was 1 and the loss in weight on heating was 0.035%. Therefore, the sheet of this example was accepted as an excellent sheet which was not easily electrified, was colorless and transparent, and could retain its properties for a long period of time due to its small loss in weight on heating.

When the sheet obtained in Example 11 is compared with that obtained in Example 10 on the basis of the electrical resistance, it can be judged that the sheet in Example 10 is superior in antistatic property to the sheet in Example 11 because the sheet in Example 10 has smaller resistance. This may be subjected by the influence of the order in which the ingredients are added.

Comparative Example 3

In this Comparative Example, the perchlorate of formula 2 was not employed. As the antistatic agent, a compound represented by the following formula was used:

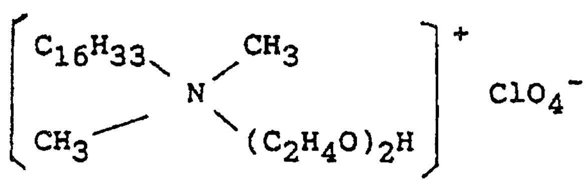

Also, TM was used as the plasticizer.

First, 1 part of the antistatic agent and 70 parts of TM were added to 100 parts of the vinyl chloride resin, and the same amount of the same stabilizer as used in Example 1 was also added thereto. Then, a sheet was obtained in the same manner as in Example 1.

Next, the properties of this sheet were measured. In the tensile test, the elongation percentage was 340% and the tensile strength was 2.6 $kg/mm^2$. In the solubility test, no bleed was observed. As for the electrical resistance, the surface resistance was 8 x $10^{10}$ ohm and the volume resistivity was 8 x $10^{11}$ ohm-cm. As for the coloring property, the sheet was colorless and transparent, so that the estimated coloring degree was 1. In addition, the volatile loss was 0.03%. Therefore, the sheet of this example was regarded as an inferior sheet which was easily electrified.

Comparative Example 4

In this Comparative Example, only the perchlorate of formula 2 was employed as the antistatic agent without using the ammonium salt of formula 1. A magnesium perchlorate was used as the perchlorate.

First, 1.3 parts of the magnesium perchlorate and 45 parts of TM were added to 100 parts of the vinyl chloride resin, and the same amount of the same stabilizer as used in Example 1 was also added thereto. Then a sheet was obtained in the same manner as in Example 1.

Next, the properties of the sheet were measured. In the tensile test, the elongation percentage was 240% and the tensile strength was 2.90 $kg/mm^2$. In the solubility test, no bleed was observed. As for the electrical resistance, the surface resistance was 5.0 x $10^{12}$ ohm and the volume resistivity was 2 x $10^{13}$ ohm-cm. As for the coloring property, the sheet was slightly colored and the estimated coloring degree was 2. In addition, the volatile loss was 0.02%. Therefore, the sheet of this example as a whole was regarded as an inferior sheet which was easily electrified.

## Claims

**1.** An antistatic composition containing:)

(a) an ammonium salt represented by the general formula 1:

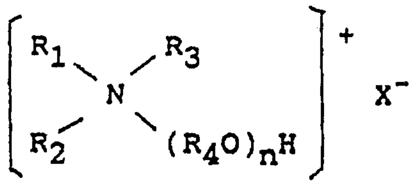

...(1)

(wherein one of $R_1$, $R_2$ and $R_3$ is an alkyl group with 5 to 24 carbon atoms while the others are alkyl groups with 1 to 5 carbon atoms, $R_4$ is an alkylene group with 2 to 4 carbon atoms, n is an integer of 1 to 15, and X is an anion of hydrochloric acid, chloric acid or perchloric acid); and

(b) a perchlorate represented by the general formula 2:

$$M(ClO_4)_m \qquad ...(2)$$

(wherein M is a metallic ion belonging to 1A or 2A of the periodic table, or an ammonium ion, and m represents 1 or 2.

2. An antistatic composition containing (a) said ammonium salt and (b) said perchlorate of claim 1 and (c) tri-2-ethylhexyltrimellitate.

3. An antistatic chlorine-containing resin composition containing said antistatic composition of claim 12 and a chlorine-containing resin.

4. An antistatic chlorine-containing resin composition containing said antistatic composition of claim 2 and a chlorine-containing resin.

5. An antistatic chlorine-containing resin composition in which 0.5 to 5 parts by weight of (a) said ammonium salt of claim 1 and 0.01 to 2.5 parts by weight of (b) said perchlorate of claim 1 are contained for every 100 parts by weight of said chlorine-containing resin.

6. An antistatic chlorine-containing resin composition in which 0.5 to 5 parts by weight of (a) said ammonium salt of claim 1, 0.01 to 2.5 parts by weight of (b) said perchlorate of claim 1 and 30 to 100 parts by weight of (c) said tri-2-ethylhexyltrimellitate are contained for every 100 parts by weight of said chlorine-containing resin.

7. A method for producing an antistatic chlorine-containing resin composition including:
a step of mixing (a) said ammonium salt of claim 1 and (b) said perchlorate of claim 1; and
a step of adding said mixture to the chlorine-containing resin.

8. A method for producing an antistatic chlorine-containing resin composition including:
a step of mixing (a) said ammonium salt of claim 1 and (b) said perchlorate of claim 1; and
a step of adding said mixture and (c) said tri-2-ethylhexyltrimellitate to the chlorine-containing resin.

Amended claims

1. (Amended) An antistatic composition containing:
(a) an ammonium salt represented by the general formula 1:

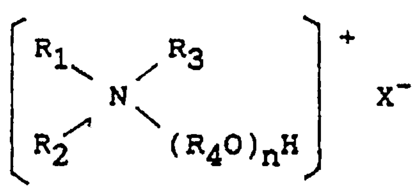

...(1)

(wherein one of $R_1$, $R_2$ and $R_3$ is an alkyl group with 5 to 24 carbon atoms while the others are alkyl groups with 1 to 5 carbon atoms, $R_4$ is an alkylene group with 2 to 4 carbon atoms, n is an integer of 1 to 15, and X is an anion of hydrochloric acid, chloric acid or perchloric acid); and

(b) a perchlorate represented by the general formula 2:

$$M(ClO_4)_m \qquad ...(2)$$

(wherein M is a metallic ion belonging to 1A or 2A of the periodic table, or an ammonium ion, and m represents 1 or 2).

**2.** An antistatic composition containing (a) said ammonium salt and (b) said perchlorate of claim 1 and (c) tri-2-ethylhexyltrimellitate.

**3.** (Amended) An antistatic chlorine-containing resin composition containing said antistatic composition of claim 1 and a chlorine-containing resin.

**4.** An antistatic chlorine-containing resin composition containing said antistatic composition of claim 2 and a chlorine-containing resin.

**5.** An antistatic chlorine-containing resin composition in which 0.5 to 5 parts by weight of (a) said ammonium salt of claim 1 and 0.01 to 2.5 parts by weight of (b) said perchlorate of claim 1 are contained for every 100 parts by weight of said chlorine-containing resin.

**6.** An antistatic chlorine-containing resin composition in which 0.5 to 5 parts by weight of (a) said ammonium salt of claim 1, 0.01 to 2.5 parts by weight of (b) said perchlorate of claim 1 and 30 to 100 parts by weight of (c) said tri-2-ethylhexyltrimellitate are contained for every 100 parts by weight of said chlorine-containing resin.

**7.** A method for producing an antistatic chlorine-containing resin composition including:
a step of mixing (a) said ammonium salt of claim 1 and (b) said perchlorate of claim 1; and
a step of adding said mixture to the chlorine-containing resin.

**8.** A method for producing an antistatic chlorine-containing resin composition including:
a step of mixing (a) said ammonium salt of claim 1 and (b) said perchlorate of claim 1; and
a step of adding said mixture and (c) said tri-2-ethylhexyltrimellitate to the chlorine-containing resin.

# INTERNATIONAL SEARCH REPORT

International Application No PCT/JP88/01130

**I. CLASSIFICATION OF SUBJECT MATTER** (if several classification symbols apply, indicate all) [6]

According to International Patent Classification (IPC) or to both National Classification and IPC

$Int.Cl^4$ C09K3/16

**II. FIELDS SEARCHED**

Minimum Documentation Searched [7]

| Classification System | Classification Symbols |
|---|---|
| IPC | C09K3/16, C08K3/00 - 13/08 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, B1, 42-13527 (Dai-ichi Kogyo Seiyaku Co., Ltd.) 1 August 1967 (01. 08. 67), Claim, page 2, Tables I to II, page 3, lower left column, the 8th line from the last line to page 3, lower left column, last line (Family: none) | 1, 3<br>5, 7 |
| Y | JP, A, 49-69773 (Fuji Photo Film Co., Ltd.) 5 July 1974 (05. 07. 74), Claim, page 2, upper left column, line 12 to page 2, upper right column, line 7, & US, A, 3899613 | 1-8 |
| Y | JP, A, 60-250056 (Mitsubishi Electric Corporation) 10 December 1985 (10. 12. 85), Claim, page 2, upper left column, line 3 to page 2, lower left column, line 9 (Family: none) | 1-8 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 24, 1989 (24. 01. 89) | February 6, 1989 (06. 02. 89) |
| **International Searching Authority** | **Signature of Authorized Officer** |
| Japanese Patent Office | |

FURTHER INFORMATION CONTINUED FROM THE SECOND SHEET

| | | |
|---|---|---|
| Y | JP, A, 61-72061 (Mitsubishi Electric Corporation) 14 April 1986 (14. 04. 86), Claim, page 2, lower left column, line 11 to page 2, lower left column, line 19 (Family: none) | 1-8 |
| Y | JP, A, 61-287950 (New Japan Chemical Co., Ltd.) 18 December 1986 (18. 12. 86) Claim, page 3, lower left column, line 15 to page 3, lower left column, line 18 (Family: none) | 2, 4 6, 8 |

V.☐ OBSERVATIONS WHERE CERTAIN CLAIMS WERE FOUND UNSEARCHABLE [1]

This international search report has not been established in respect of certain claims under Article 17(2) (a) for the following reasons:

1.☐ Claim numbers ...... , because they relate to subject matter not required to be searched by this Authority, namely:

2.☐ Claim numbers ...... , because they relate to parts of the international application that do not comply with the prescribed requirements to such an extent that no meaningful international search can be carried out, specifically:

3.☐ Claim numbers ......, because they are dependent claims and are not drafted in accordance with the second and third sentences of PCT Rule 6.4(a).

VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

**FURTHER INFORMATION CONTINUED FROM THE SECOND SHEET**

| | | |
|---|---|---|
| Y | JP, A, 63-69884 (Lion Corporation) 29 March 1988 (29. 03. 88), Claim, & DE, A1, 3730444 | 1-8 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers ...., because they relate to subject matter not required to be searched by this Authority, namely:

2.☐ Claim numbers ......., because they relate to parts of the international application that do not comply with the prescribed requirements to such an extent that no meaningful international search can be carried out, specifically:

3.☐ Claim numbers ...., because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.